# EUROPEAN PATENT APPLICATION

(11) **EP 4 615 063 A1**
(43) Date of publication of application: **10.09.2025**
(21) Application number: 23884484.9
(22) Date of filing: 18.09.2023
(51) Int. Cl.: H04W 52/02

(54) **ENERGY SAVING INSTRUCTION METHOD AND APPARATUS**

(30) Priority: 04.11.2022 CN 202211379652; 07.04.2023 CN 202310371610; 01.06.2023 CN 202310646603
(71) Applicant: Datang Mobile Communications Equipment Co., Ltd., Beijing 100085 (CN)
(72) Inventor: LI, Yaomin, Beijing 100085 (CN); LUO, Chen, Beijing 100085 (CN); WANG, Jiaqing, Beijing 100085 (CN); YANG, Meiying, Beijing 100085 (CN)
(74) Representative: dompatent von Kreisler Selting Werner - Partnerschaft von Patent- und Rechtsanwälten mbB
(86) International application number: PCT/CN2023/119497
(87) International publication number: WO 2024/093552

(57) **Abstract**

An energy-saving indication method and an energy-saving indication device are provided, relating to the field of communication technology. The method includes: a terminal receiving an energy-saving signaling; the terminal determining a dormancy window according to the energy-saving signaling, and entering a dormancy state within the dormancy window; where a duration of the dormancy window is related to a transmission parameter and/or an energy-saving configuration of a first object.

## Description

This disclosure claims priority to: Chinese Patent Application No. 202211379652.1, titled "An Energy-Saving Indication Method and Apparatus," filed with the China National Intellectual Property Administration on November 4, 2022, Chinese Patent Application No. 202310371610.1, titled "An Energy-Saving Indication Method and Apparatus," filed with the China National Intellectual Property Administration on April 7, 2023, and Chinese Patent Application No. 202310646603.8, titled "An Energy-Saving Indication Method and Apparatus," filed with the China National Intellectual Property Administration on June 1, 2023. The entire contents of all the above applications are incorporated herein by reference.

### TECHNICAL FIELD

The present disclosure relates to the field of communication technology, and in particular, to an energy-saving indication method and an energy-saving indication device.

### BACKGROUND

The energy-saving indication method supported by the existing technology is that the Media Access Control (MAC) control unit (Control Element, CE) performs dormancy instructions to instruct the terminal to terminate all discontinuous reception activation timers (drx-OndurationTimer) and discontinuous reception-inactivity timer (drx-InactivityTimer) in advance.

However, the way in which MAC-CE indicates dormancy can only take effect after the terminal receives the dormancy indication and feeds back confirmation (ACK), so there is an ACK feedback delay.

### SUMMARY

The present disclosure is to provide an energy-saving indication method and device to solve the problem of how to achieve more effective energy-saving.

In order to achieve the above object, an energy-saving indication method is provided in an embodiment of the present disclosure, including:
a terminal receiving an energy-saving signaling;
the terminal determining a dormancy window according to the energy-saving signaling, and entering a dormancy state within the dormancy window;
where a duration of the dormancy window is related to a transmission parameter and/or an energy-saving configuration of a first object.

Optionally, the first object includes one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

Optionally, the terminal entering the dormancy state within the dormancy window includes:
the terminal performing, within the dormancy window based on first configuration information, one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

Optionally, the energy-saving signaling is a dynamic signaling, and the energy-saving signaling includes one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

Optionally, a starting time of the dormancy window is determined based on one or more of:
a time of receivingtime of receiving the energy-saving signaling;
a time of ACK after scheduling information indicated by the energy-saving signaling is successfully received; and
a time of receiving the scheduling information indicated by the energy-saving signaling.

Optionally, an end time of the dormancy window is determined based on second configuration information, and the second configuration information includes one or more of:
at least one discontinuous reception configuration parameter;
exclusive reception window parameters of a first service, where the first service corresponds to the first object;
dormancy duration;
dormancy end reference time; and
a location for monitoring PDCCH retransmissions during dormancy.

Optionally, a first indication field of the energy-saving signaling is configured to carry a dormancy indication; where,
the first indication field is a dormancy-specific indication field; or,
the first indication field is an indication field specified in the DCI.

Optionally, the first indication field is a PDCCH monitoring adaptation indication field, and the first indication field indicates dormancy through a reserved value.

Optionally, when the first indication field is further configured to indicate first configuration information and/or second configuration information, a bit length of the first indication field is determined by a quantity of the first configuration information and/or the second configuration information.

Optionally, when the energy-saving signaling is a DCI, reception configuration information of the energy-saving signaling includes one or more of:
a payload size;
a control resource set (CORESET);
a search space (SS); and
a radio network temporary identity (RNTI).

Optionally, the method further includes:
if there is a scheduling data reception error and a retransmission is not completed, according to rules predefined in a protocol, the terminal terminating or suspending the dormancy within the dormancy window, and performing at least one of:
monitoring retransmissions and/or initial transmissions of PDCCH on a search space (SS);
the discontinuous reception-Inactivity timer (drx-Inactivity Timer);
measuring or reporting reference signals;
transmitting data and /or receiving data on the SPS resource on a configured grant (CG);
   or,
the terminal determining retransmission PDCCH configuration information and/or third configuration information in the energy-saving configuration, and terminating or suspending the dormancy within the dormancy window according to the retransmission PDCCH configuration information and/or the third configuration information in the energy-saving configuration, and performing at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

Optionally, a starting time of terminating or suspending dormancy includes any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

Optionally, the end time of suspending dormancy including any one of:
discontinuous reception-downlink retransmission timer (drx-RetransmissionTimerDL) expires;
a time domain position of correctly receiving the retransmitted data and feeding back the ACK by the terminal.

Optionally, the terminating or suspending dormancy within the dormancy window includes:
the terminal terminating or suspending the dormancy within the dormancy window based on a first duration;
where the first duration is a duration threshold of the dormancy window predefined by a protocol or in the third configuration information.

In order to achieve the above object, an energy-saving indication method is further provided in an embodiment of the present disclosure, including:
a network side device sending an energy-saving signaling to a terminal;
where the energy-saving signaling is configured to instruct the terminal to determine a dormancy window and instruct the terminal to enter a dormancy state within the dormancy window;
where durationof the dormancy window is related to a transmission parameter and/or an energy-saving configuration of a first object.

Optionally, the first object includes one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

Optionally, the method further includes:
the network side device sending first configuration information, and the first configuration information is configured to configure the terminal to perform within the dormancy window one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

Optionally, the energy-saving signaling is a dynamic signaling, and the energy-saving signaling includes one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC_CE) layer signaling.

Optionally, a starting time of the dormancy window is determined based on one or more of:
a time of receiving the energy-saving signaling;
a time of ACK after scheduling information indicated by the energy-saving signaling is successfully received; and
a time of receiving the scheduling information indicated by the energy-saving signaling.

Optionally, the method further includes:
the network side device sending second configuration information, where the second configuration information is configured to configure the end time of the dormancy window; where the second configuration information includes one or more of:
at least one discontinuous reception configuration parameter;
exclusive reception window parameters of a first service, where the first service corresponds to the first object;
dormancy duration;
dormancy end reference time; and
a location for monitoring PDCCH retransmissions during dormancy.

Optionally, a first indication field of the energy-saving signaling is configured to carry a dormancy indication; where,
the first indication field is a dormancy-specific indication field; or,
the first indication field is an indication field specified in the DCI.

Optionally, the first indication field is a PDCCH monitoring adaptation indication field, and the first indication field indicates dormancy through a reserved value.

Optionally, when the first indication field is further configured to indicate first configuration information and/or second configuration information, a bit length of the first indication field is determined by a quantity of the first configuration information and/or the second configuration information.

Optionally, the method further includes:
when the energy-saving signaling is DCI, the network- side device sending the reception configuration information of the energy-saving signaling; where the reception configuration information includes one or more of:
a payload size;
a control resource set (CORESET);
a search space (SS); and
a radio network temporary identity (RNTI).

Optionally, the method further includes:
the network side device sending retransmission PDCCH configuration information; where the retransmission PDCCH configuration information is configured to configure the terminal to terminate or suspend the dormancy within the dormancy window and perform at least one of:
monitoring retransmissions and/or initial transmissions of PDCCH on a search space (SS);
starting the discontinuous reception -Inactivity timer (drx-Inactivity Timer);
measuring or reporting reference signals;
transmitting data and /or receiving data on the SPS resource on a configured grant (CG).

Optionally, a starting time of terminating or suspending dormancy includes any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

Optionally, the end time of suspending dormancy including any one of:
discontinuous reception-downlink retransmission timer (drx-RetransmissionTimerDL) expires;
a time domain position of correctly receiving the retransmitted data and feeding back the ACK by the terminal.

In order to achieve the above objects, an energy-saving indicating device is further provided in an embodiment of the present disclosure, including a memory, a transceiver, and a processor; where
the memory is configured to store program instructions; a transceiver is configured to send and receive data under a control of the processor; a processor is configured to read the program instructions in the memory; the energy-saving indicating device is configured to perform the method performed by the a network side device hereinabove.

In order to achieve the above object, an energy-saving indicating device is further provided in an embodiment of the present disclosure, including:
a receiving module, configured to receive an energy-saving signaling;
a first processing module, configured to determine a dormancy window according to the energy-saving signaling and enter a dormancy state within the dormancy window;
where a duration of the dormancy window is related to a transmission parameter and/or an energy-saving configuration of a first object.

In order to achieve the above object, an energy-saving indicating device is further provided in an embodiment of the present disclosure, including a memory, a transceiver, and a processor; where
the memory is configured to store program instructions; a transceiver is configured to send and receive data under a control of the processor; a processor is configured to read the program instructions in the memory; the energy-saving indicating device is configured to perform the method performed by the a terminal hereinabove.

In order to achieve the above object, an energy-saving indicating device is further provided in an embodiment of the present disclosure, including:
a first sending module, configured to send an energy-saving signaling to a terminal;
where the energy-saving signaling is configured to instruct the terminal to determine a dormancy window and instruct the terminal to enter a dormancy state within the dormancy window;
where a duration of the dormancy window is related to a transmission parameter and/or an energy-saving configuration of a first object.

In order to achieve the above object, a processor-readable storage medium is further provided in an embodiment of the present disclosure, where the processor-readable storage medium stores computer programs, and the computer programs are configured to enable the processor to perform the energy-saving indication method performed by the a network side device hereinabove or the energy-saving indication method performed by a terminal hereinabove.

The above technical solution of the present disclosure has at least the following beneficial effects:
according to the energy-saving indication method of the embodiment of the present disclosure, after receiving the energy-saving signaling, the terminal can determine the dormancy window based on the energy-saving signaling, and enter the dormancy state within the dormancy window. Therefore, the terminal's energy-saving no longer has ACK feedback delay, and because the duration of the dormancy window is related to the transmission parameters of the first object, and /or the duration of the dormancy window is related to the energy-saving configuration of the first object, it can also be adjusted with the first object, thereby achieving a more effective energy-saving.

### BRIEF DESCRIPTION OF THE DRAWINGS

Fig. 1 is one of the schematic flow diagrams of the method according to the embodiment of the present disclosure;
Fig. 2 is one of the application schematic diagrams of the method according to the embodiment of the present disclosure;
Fig. 3 is a second application schematic diagram of the method according to the embodiment of the present disclosure;
Fig. 4 is a third application schematic diagram of the method according to the embodiment of the present disclosure;
Fig. 5 is a fourth application schematic diagram of the method according to the embodiment of the present disclosure;
Fig. 6 is a second schematic flowchart of the method according to the embodiment of the present disclosure;
Fig. 7 is a first structural block diagram of the device according to the embodiment of the present disclosure;
Fig. 8 is a first module schematic diagram of the device according to the embodiment of the present disclosure;
Fig. 9 is a second structural block diagram of the device according to the embodiment of the present disclosure; and
Fig. 10 is a second module schematic diagram of the device according to the embodiment of the present disclosure.

### DETAILED DESCRIPTION

In the embodiment of the present disclosure, the term "and/or" describes the relationship between associated objects, indicating that there can be three relationships, for example, A and/or B, which can mean: A exists alone, A and B exist simultaneously, and B exists alone. The character "/" generally indicates that the related objects are in an "or" relationship.

In the embodiments of the present disclosure, the term "plurality" refers to two or more than two, and other quantifiers are similar to it.

The technical solutions in the embodiments of the present application will be clearly and completely described below with reference to the accompanying drawings in the embodiments of the present application. Obviously, the described embodiments are only some of the embodiments of the present application, not all of the embodiments. Based on the embodiments in the present disclosure, all other embodiments obtained by those of ordinary skill in the art without creative efforts fall within the scope of protection of the present disclosure.

The embodiments of the present disclosure provide an energy-saving indication method and device. Among them, the method and the device are based on the same application concept. Since the principles of the method and the device to solve the problem are similar, the implementation of the device and the method can be referred to each other, and the repeated details will not be repeated.

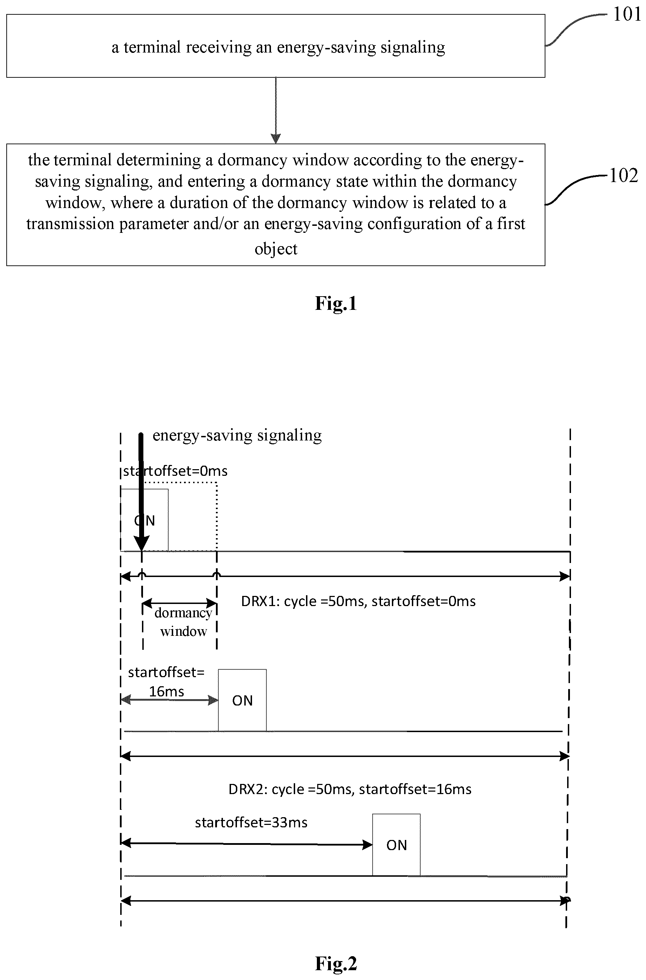

As shown in Fig.1, an energy-saving indication method is provided in an embodiment of the present disclosure, including:
Step 201: a terminal receiving an energy-saving signaling;
Step 202: the terminal determining a dormancy window according to the energy-saving signaling, and entering a dormancy state within the dormancy window;
where a duration of the dormancy window is related to a transmission parameter and/or an energy-saving configuration of a first object.

In this way, after receiving the energy-saving signaling according to steps 201-202, the terminal can determine the dormancy window based on the energy-saving signaling, and enter the dormancy state within the dormancy window. Therefore, the terminal's energy-saving no longer has ACK feedback delay. Moreover, since the duration of the dormancy window is related to the transmission parameters of the first object, and/or the duration of the dormancy window is related to the energy-saving configuration of the first object, it can also be adjusted with the first object, thereby achieving more effective energy-saving.

It should be noted that in the embodiment of the present disclosure, the terminal enters the dormancy in the dormancy window means that the terminal enters the dormancy state in the dormancy window.

Optionally, the transmission parameter may be a sending or receiving window of the first object.

Optionally, the first object includes one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

Optionally, the first object is a transmission corresponding to the first service.

Here, the first service may be a specific one or more services.

In an embodiment of the present disclosure, the first service is an Extended Reality (XR) service.

In an embodiment of the present disclosure, for the first service (such as XR service), the network side device can configure a semi-static configuration based on the service or service flow sub-data stream transmission characteristics, at least one Discontinuous Reception (DRX) configuration, and one DRX configuration. Multiple sets of parameters are placed. In this way, at least one DRX configuration and multiple sets of parameters under one DRX configuration can all be the transmission parameters of the first object.

In an embodiment of the present disclosure, the network side device can configure a PDCCH monitoring window exclusive to the first service (such as XR-Specific PDCCH Monitoring Window (XR-Specific PMW)) for the first service (such as XR service), in this way, the transmission parameter of the first object may be the relevant transmission of the PDCCH listening window dedicated to the first service. The PDCCH monitoring window exclusive to the first service can also be understood as the window of the first object.

In an embodiment of the present disclosure, the network side device can directly configure the energy-saving configuration for the first service (such as the XR service) to determine the duration of the dormancy window.

Of course, the transmission parameters of the first object and the energy-saving configuration of the first object can be configured by the network side device, or can be predefined.

Optionally, the terminal entering the dormancy state within the dormancy window includes:
the terminal performing, within the dormancy window based on first configuration information, one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

That is, the terminal will perform at least one of the above behaviors according to the first configuration information within the dormancy window. In this way, the terminal also performs at least one of the above actions in the dormancy state.

Not monitoring the PDCCH may be stopping the drx-onDuartion Timer and/or the drx-Inactivity Timer on at least one DRX.

The skipping a reception and/or transmission of SPS resources can also be understood as skipping the SPS occasion(s).

The skipping a reception and/or transmission of CG resources can also be understood as skipping CG occasion(s).

The skipping an ACK or NACK feedback can also be understood as skipping ACK or NACK feedback occasion.

The timers configured on the network side include but are not limited to drx-OndurationTimer and drx-InactivityTimer. Therefore, stopping at least one timer configured on the network side may be stopping drx-OndurationTimer, stopping drx-InactivityTimer, etc. Here, the first configuration information may be predefined or configured by the network side device. Specifically, the first configuration information is for the first service.

In an embodiment of the present disclosure, the reference signal includes a channel state information reference signal (Channel State Information Reference Signal (CSI-RS), Tracking Reference Signal (TRS), etc.

In addition, based on the first configuration information, the terminal does not measure the reference signal within the dormancy window.

Optionally, the energy-saving signaling is a dynamic signaling, and the energy-saving signaling includes at least one of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

Here, the DCI is signaling specifically used to instruct the terminal to save energy. DCI used to schedule can not only be used to instruct terminals to save energy, but can also be used to schedule data transmission. DCI not used to schedule can not only be used to instruct terminals to save energy, but can also be used for other purposes. The MAC layer signaling can also be used to instruct the terminal to save energy.

The MAC layer signaling can be MAC-CE signaling, but at this time, the MAC-CE signaling serves as the above-mentioned energy-saving signaling. There is no need to wait for ACK feedback, and the terminal can directly enter dormancy within the dormancy window.

Of course, the implementation of energy-saving signaling includes but is not limited to the above-mentioned signaling, which will not be listed here.

The specific reception configuration information (i.e., signaling reception parameters) is also predefined or configured on the network side device. Optionally, when the energy-saving signaling is DCI, the reception configuration information of the energy-saving signaling includes one or more of:
a payload size;
a control resource set (CORESET);
a search space (SS); and
a radio network temporary identity (RNTI).

In this way, when the terminal receives the energy-saving signaling, it will receive it according to its exclusive reception configuration information.

In an embodiment of the present disclosure, the control resource set CORESET/SS includes: a dedicated PDCCH monitoring period and a dedicated PDCCH monitoring time domain duration.

As an implementation, RNTI can be dormancy RNTI (Go- To - dormancy_RNTI, GTS_RNTI).

Optionally, a starting time of the dormancy window is determined based on one or more of:
a time of receiving the energy-saving signaling;
a time of ACK after scheduling information indicated by the energy-saving signaling is successfully received; and
a time of receiving the scheduling information indicated by the energy-saving signaling.

That is to say, after receiving the energy-saving signaling, the terminal can determine the starting time of the dormancy window based on the energy-saving signaling.

In an embodiment of the present disclosure, if the start time of the dormancy window is determined based on the time of receiving the energy-saving signaling, that is, the start time of the dormancy window is associated with the time of receiving the energy-saving signaling. For example, the terminal receives the energy-saving signaling and then enters dormancy immediately; if the start time of the dormancy window is determined based on the time when the ACK is fed back after the scheduling information indicated by the energy-saving signaling is successfully received, that is, the start time of the dormancy window is associated with the time when the ACK is fed back after the scheduling information indicated by the energy-saving signaling is successfully received. For example, after the terminal successfully receives the data scheduled by the dynamic signaling, it will enter dormancy at the time when the ACK is fed back; if the start time of the dormancy window is determined based on the time of receiving the scheduling information indicated by the energy-saving signaling, that is, the start time the of the dormancy window is associated with the time of receiving the scheduling information indicated by the energy-saving signaling. For example, the terminal receives the data scheduled by the dynamic signaling and enters dormancy when the data reception is completed.

The start time of the dormancy window can also be determined in combination with energy-saving signaling and relevant information that is predefined or configured by the network side device. For example, if the network side device configures the starting offset of the dormancy window, then after receiving the energy-saving signaling, the terminal needs to wait for a period of time (the duration of the period is equal to the starting offset) to enter the dormancy.

Optionally, an end time of the dormancy window is determined based on second configuration information, and the second configuration information includes one or more of:
at least one discontinuous reception configuration parameter;
exclusive reception window parameters of a first service, where the first service corresponds to the first object;
dormancy duration;
dormancy end reference time; and
a location for monitoring PDCCH retransmissions during dormancy.

Here, the second configuration information is predefined or configured by the network side device. Specifically, the first configuration information is for the first service.

At least one non-continuous reception configuration parameter may be: parameters of multiple sets (groups) of DRX configurations, and/or multiple parameters under one set (group) of DRX configurations, such as one DRX cycle configured with multiple non-continuous reception parameters. Continuous receive start offset (drx-StartOffset).

The exclusive receiving window an exclusive layer one signal receiving window configured based on the transmission characteristics of the specific service or service sub-data stream, such as XR-Specific PMW when the first service is XR.

The dormancy duration can be configured based on service transmission characteristics such as cycle and delay jitter.

The dormancy end reference time includes: a dormancy termination candidate position, and/or a position used to determine the dormancy end time.

The position where the terminal monitors PDCCH retransmission during dormancy period is the position where the terminal monitors PDCCH retransmission in the dormancy window.

Optionally, a first indication field of the energy-saving signaling is configured to carry a dormancy indication; where,
the first indication field is a dormancy-specific indication field; or,
the first indication field is an indication field specified in the DCI.

Here, the dormancy indication is used to instruct the terminal to enter the dormancy state.

That is to say, for energy-saving signaling, the sleep-dedicated indication domain can be used to carry the sleep indication; the specified indication domain is an existing indication domain, that is, other indication domains (existing indication fields) can also be reused to carry the sleep indication. Of course, the designated indication domain is not limited to DCI. That is, when the energy-saving signaling is not DCI, the existing indication domain can also be reused to carry the sleep indication.

In an embodiment of the present disclosure, when other indication fields are multiplexed to carry the dormancy indication, dormancy is indicated through the reserve value (reserve value) of the indication field.

Optionally, the first indication field is a PDCCH monitoring adaptation indication field (PDCCH monitoring adaptation indication), and the first indication field indicates dormancy through a reserved value.

The PDCCH monitoring adaptation indication field can be used to carry skip PDCCH monitoring instructions or Search Space Set Group (SSSG) conversion instructions.

In an embodiment of the present disclosure, the DCI includes a dormancy dedicated indication field and/or a PDCCH monitoring adaptation indication field, where the dormancy dedicated indication field carries the dormancy indication.

In an embodiment of the present disclosure, the DCI for schedule is added with a dormancy dedicated indication field, and/or the reserve value of the existing PDCCH monitoring adaptation indication field indicates dormancy.

Of course, for different implementations of indication signaling, when the multiplexed indication field is used to carry the dormancy indication, in addition to the PDCCH monitoring adaptation indication field, the first indication field can also be other indication fields, such as DCI (DCI) not used to schedule. Such as DCI 2_6), the dormancy indication is carried through the existing secondary cell dormancy indication field (scell dormancy indication); 4) 3) Using MAC-CE signaling carried by PDSCH, a dormancy-specific indication field is added to carry the dormancy indication, where the bit length of the dormancy-specific indication field is predefined.

In addition, when the network side device configures the above-mentioned first configuration information and/or second configuration information, the network side device can also indicate the first configuration information and/or the second configuration information through the first indication field to save the signaling overhead.

Optionally, in the case where the first indication field is also used to indicate the first configuration information and/or the second configuration information, the bit length of the first indication field is determined by the quantity of the first configuration information and/or the second configuration information.

Taking four types of first configuration information as an example, the first indication field requires 2 bits in length. The 2-bit value is used to indicate the sequence number of the first configuration information used. For example, "01" indicates the use of the first configuration information with sequence number 2.; Or, the first indication field needs to be 4 bits in length, and the first configuration information used is indicated by the bit corresponding to the sequence number of the first configuration information, such as "0100" indicating the use of the first configuration information with sequence number 3.

Of course, the bit length of the first indication field may also be predefined, for example, the bit length of the first indication field is predefined to be 1.

Optionally, the method also includes:
if there is a scheduling data reception error and a retransmission is not completed, according to rules predefined in a protocol, the terminal terminating or suspending the dormancy within the dormancy window, and performing at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG);
   or,
the terminal determining retransmission PDCCH configuration information and/or third configuration information in the energy-saving configuration, and terminating or suspending the dormancy within the dormancy window according to the retransmission PDCCH configuration information and/or the third configuration information in the energy-saving configuration, and performing at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

The third configuration information is predefined or preconfigured information.

That is, according to the rules predefined by the protocol, if there is a scheduling data reception error and retransmission is not completed, for example, the terminal needs to monitor retransmission of scheduling information during dormancy, terminate or suspend dormancy within the dormancy window, and execute at least one of the following: monitoring retransmission and/or initial transmission of PDCCH on SS; starting drx-Inactivity Timer; measuring or reporting reference signals; transmiting data on CG and /or receiving data on SPS resources.

Alternatively, the terminal can determine the third configuration information in the energy-saving configuration and/or the retransmission PDCCH configuration information that is predefined or configured by the network side device, and according to the third configuration information and/or the retransmission PDCCH configuration information, during dormancy Terminate or suspend dormancy within the window, and perform at least one of: monitoring retransmissions and/or initial transmissions of PDCCH on the search space (SS); starting the drx-Inactivity Timer; measuring or reporting reference signals; transmiting data and /or receiving the CG Data on SPS resources. Optionally, when there is a scheduling data reception error and the retransmission is completed, for example, the terminal needs to monitor retransmission of scheduling information during dormancy, the terminal determines to retransmit the PDCCH configuration information and/or the third configuration information in the energy-saving configuration, to terminate or suspend hibernation within the hibernation window and perform at least one of the above.

If the PDCCH configuration information is not configured (including not defined in advance or not configured on the network side device) to retransmit the PDCCH configuration, the terminal will listen for PDCCH retransmission after the dormancy window ends, but not within the dormancy window.

Optionally, the terminating or suspending dormancy within the dormancy window includes:
the terminal terminating or suspending the dormancy within the dormancy window based on a first duration;
the first duration is a duration threshold of the dormancy window predefined by a protocol or in the third configuration information.

In this embodiment, dormancy can also be understood as a skipping step, that is, the first duration can also be understood as the threshold value of the skipping step. The terminal terminating or suspending dormancy within the dormancy window based on the first duration may be the terminal determining the duration of the dormancy window, and terminating or resuming the dormancy when the determined duration of the dormancy window is greater than the first duration and there is a reception error in scheduling data in the dormancy window and the retransmission is not completed. For example, the terminal determines the duration of the dormancy window based on the second configuration information, and the determined duration of the dormancy window is greater than the first duration. When the terminal receives a NACK within the dormancy window, it resumes PDCCH monitoring.

Of course, if the duration of the dormancy window determined by the terminal is not greater than the first duration, even if there is a scheduling data reception error within the dormancy window and the retransmission is not completed (such as receiving a NACK), it will continue to dormancy until the end time of the dormancy window.

In an embodiment of the present disclosure, the protocol-predefined rules include that the determined duration of the dormancy window is greater than the first duration. Or, as an implementation manner, the third configuration information includes the first duration, and the third configuration information may be information predefined by a protocol or information preconfigured by RRC signaling.

On the other hand, the first configuration information can also configure the terminal to monitor retransmission of PDCCH configuration information in the dormancy window. In this way, the terminal can determine the retransmission of PDCCH configuration information through monitoring, and then monitor retransmission according to the retransmission of PDCCH configuration information in the dormancy window. PDCCH. Of course, if the terminal is not configured to listen for retransmission of PDCCH configuration information in the dormancy window, the terminal will listen for retransmission of PDCCH after the dormancy window ends.

Optionally, the starting time of terminating or suspending dormancy includes any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

Optionally, the end time of suspending dormancy including any one of:
discontinuous reception-downlink retransmission timer (drx-RetransmissionTimerDL) expires;
a time domain position of correctly receiving the retransmitted data and feeding back the ACK by the terminal.

Optionally, in this embodiment, if the terminal terminates the dormancy, the terminal continues to enter the active state. In this way, in this embodiment, when the terminal needs to monitor retransmission scheduling information during dormancy, the terminal can enter the normal data receiving state (also can be understood as the activation state) from the dormancy state in the dormancy window until the terminal successfully receives the retransmission scheduled data or the number of retransmissions reaches the maximum number of retransmissions. At this time, if the terminal is still within the dormancy window, the terminal can continue to enter the dormancy state until the end of the dormancy window, or the terminal can continue to remain active and can perform normal data transmission.

Of course, if the terminal does not need to monitor retransmission scheduling information in the dormancy window, the terminal will enter the dormancy state immediately after successfully receiving the dormancy indication information until the end of the dormancy window.

Optionally, the retransmission PDCCH configuration information can be used to determine the retransmission PDCCH monitoring occasion.

The PDCCH retransmission configuration information includes the start time and duration of PDCCH retransmission monitoring.

It should be noted that the retransmission PDCCH configuration information configured by the network side device can also be indicated through energy-saving signaling, which is the same as the first configuration information and the second configuration information, and will not be described again here. Of course, in this embodiment, other configurations of the network side device may also be indicated through energy-saving signaling or other signaling.

Below, the specific applications of the embodiments of the present disclosure will be described in combination with specific scenarios:

Scenario 1: The base station configures at least one set of DRX configurations according to the transmission service characteristics (the parameters under each set of DRX configurations include independent DRX cycle, drx-StartOffset, drx-OndurationTimer, drx-InactivityTimer, etc.), matching the first service to achieve and Transmission performance requirements.

In this scenario, the network side device determines the energy-saving signaling (such as DCI) and sends the signaling according to the service transmission situation. Of course, the network side device may also configure one or more of the first configuration information, the second configuration information, and the retransmission PDCCH configuration information.

In this way, after receiving the energy-saving signaling, the terminal immediately enters the dormancy state based on the association between the start time of the dormancy window and the energy-saving signaling; or after successfully receiving the energy-saving signaling scheduling data and feeding back ACK, it enters the dormancy state.

The end time of the dormancy window is determined based on the second configuration information.

The terminal performs one or more of in the dormancy window (it can also be understood as including at least one of behaviors in the dormancy state):
stops drx-onDuartion Timer and /or drx-Inactivity Timer on at least one DRX;
the reference signal is not measured;
skip SPS/CG occasion(s);
skip ACK/NACK feedback timing;
monitor and retransmit PDCCH configuration information.

If there is a scheduling data reception error before the terminal receives the energy-saving signaling, and the retransmission is completed, the terminal performs monitoring of the retransmission PDCCH configuration information in the dormancy window may be monitoring retransmission PDCCH through the monitored retransmission PDCCH configuration information. The monitoring timing of retransmission PDCCH is determined by the retransmission PDCCH configuration information.

Of course, if the PDCCH configuration information is not configured to be retransmitted, PDCCH retransmission will be monitored after the dormancy window ends.

For example, as shown in Fig. 2, the network side configures three sets of DRX for the terminal. DRX1~DRX3 match the transmission characteristics of the first service (such as XR service) (including: arrival cycle of XR data, network delay jitter).

The data packet transmission is completed and correct before the drx-OndurationTimer of DRX1 times out. The network side device issues energy-saving signaling to instruct the terminal to enter the dormancy state. The terminal successfully receives this energy-saving signaling and immediately enters the dormancy state.

The end time of the network side device configuration or pre-defined dormancy window is determined by DRX1~DRX3 (it can also be one or two of DRX1~3). Therefore, if the network side device configuration or pre-defined end time of the terminal dormancy window is The starting time of the DRX configuration associated with the next earliest drx-StartOffset (that is, the starting time of DRX ON duration of DRX2), as shown in Fig. 2, the dormancy window is from the time when energy-saving signaling is received to the DRX ONduration of DRX2 The starting time, that is, the terminal enters the dormancy state after receiving the instruction and continues until the DRX ONduration starting time of DRX2.

When the terminal enters the dormancy state, there are SPS/CG, ACK/NACK feedback timing resource configurations, and reference signal measurement positions. Based on the first configuration information, it is decided whether to skip SPS/CG transmission resources and ACK/NACK feedback timing, and whether to measure reference signal.

Scenario 2: Based on the characteristics of the transmission service, the base station configures multiple parameters under at least one set of DRX (for example, configuring multiple drx-StartOffset in one DRX cycle) to match the first service and transmission performance requirements.

In this scenario, the network side device determines the energy-saving signaling (such as DCI) and sends the signaling according to the service transmission situation. Of course, the network side device may also configure one or more of the first configuration information, the second configuration information, and the retransmission PDCCH configuration information.

In this way, after receiving the energy-saving signaling, the terminal immediately enters the dormancy state based on the association between the start time of the dormancy window and the energy-saving signaling; or after successfully receiving the energy-saving signaling scheduling data and feeding back ACK, it enters the dormancy state.

The end time of the dormancy window is determined based on the second configuration information.

The terminal performing one or more of the following in the dormancy window (it can also be understood as including at least one of behaviors in the dormancy state):
stops drx-onDuartion Timer and /or drx-Inactivity Timer on at least one DRX;
not measure the reference signal;
skip SPS/CG occasion(s);
skip ACK/NACK feedback timing;
monitor and retransmit PDCCH configuration information.

If there is a scheduling data reception error before the terminal receives the energy-saving signaling, and the retransmission is completed, the terminal performs monitoring of the retransmission PDCCH configuration information in the dormancy window may be monitoring retransmission PDCCH through the monitored retransmission PDCCH configuration information. The monitoring occasion of retransmission PDCCH is determined by the retransmission PDCCH configuration information.

Of course, if the PDCCH configuration information is not configured to be retransmitted, PDCCH retransmission will be monitored after the dormancy window ends.

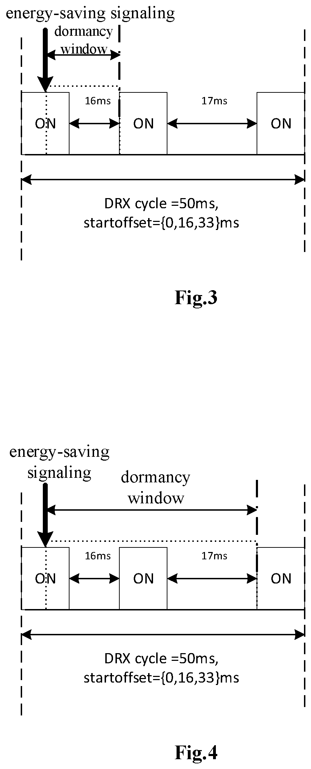

For example, as shown in Fig. 3, the network side device configures a set of three startoffsets of DRX corresponding to the first service (such as XR service) for the terminal, that is, startoffset={0,17,33}ms. The data packet successfully completes the transmission of an XR data packet during the first DRX Onduration (i.e. startoffset=0ms). The network side device issues energy-saving signaling, and the terminal immediately enters the dormancy state after receiving the energy-saving instruction. The end time of the network side device configuration or pre-defined dormancy window is determined by the DRX window (such as DRX Onduration) corresponding to these three startoffsets. If the network side device configuration or pre-defined end time of the terminal dormancy window is associated with startoffset=17ms, then as follows: As shown in Fig. 3, the dormancy window is the starting time from the moment the energy-saving signaling is received to the next earliest DRX Onduration (i.e. startoffset=17ms). That is, the terminal enters the dormancy state after receiving the instruction and continues until the next earliest DRX Onduration. The starting time of DRX Onduration (i.e. startoffset=17ms)

Or, as shown in Fig. 4, the network side device configures a set of three DRX startoffsets for the terminal corresponding to the first service (such as the XR service), that is, startoffset={0,17,33}ms. The data packet successfully completes the transmission of an XR data packet during the first DRX Onduration (i.e. startoffset=0ms). The network side device issues energy-saving signaling, and the terminal immediately enters the dormancy state after receiving the energy-saving instruction. The end time of the network side device configuration or pre-defined dormancy window is determined by the DRX Onduration corresponding to these three startoffsets. If the network side device configuration or pre-defined end time of the terminal dormancy window is associated with startoffset= 33 ms, as shown in Fig. 4, the dormancy window is the starting time from the moment when energy-saving signaling is received to the next earliest DRX Onduration (i.e. startoffset=33ms), that is, the terminal enters the dormancy state after receiving the instruction and continues until the next earliest DRX Onduration (i.e. startoffset=33ms) starting time.

Scenario 3: The base station configures an independent PDCCH listening window for the transmission of specific services and/or service sub-data flows according to the transmission service characteristics. For example, if the first service is the XR service, XR-Specific PMW is configured. If the network side device is configured with DRX at this time, the terminal can also periodically monitor and schedule PDCCH according to the configuration of the listening window during the DRX OFF period.

In this scenario, the network side device determines energy-saving signaling (such as DCI) and sends the signaling according to the service transmission situation. Of course, the network side device may also configure one or more of the first configuration information, the second configuration information, and the retransmission PDCCH configuration information.

In this way, after receiving the energy-saving signaling, the terminal immediately enters the dormancy state based on the association between the start time of the dormancy window and the energy-saving signaling; or after successfully receiving the energy-saving signaling scheduling data and feeding back ACK, it enters the dormancy state.

The end time of the dormancy window is determined based on the second configuration information.

The terminal performs one or more of the following in the dormancy window (it can also be understood as including at least one of behaviors in the dormancy state):
stops drx-onDuartion Timer and /or drx-Inactivity Timer on at least one DRX;
not measure reference signal;
skip SPS/CG occasion(s);
skip ACK/NACK feedback timing;
monitor and retransmit PDCCH configuration information.

If there is a scheduling data reception error before the terminal receives the energy-saving signaling, and the retransmission is completed, the terminal performs monitoring of the retransmission PDCCH configuration information in the dormancy window may be monitoring retransmission PDCCH through the monitored retransmission PDCCH configuration information. The monitoring occasion of retransmission PDCCH is determined by the retransmission PDCCH configuration information.

Of course, if the PDCCH configuration information is not configured to be retransmitted, PDCCH retransmission will be monitored after the dormancy window ends.

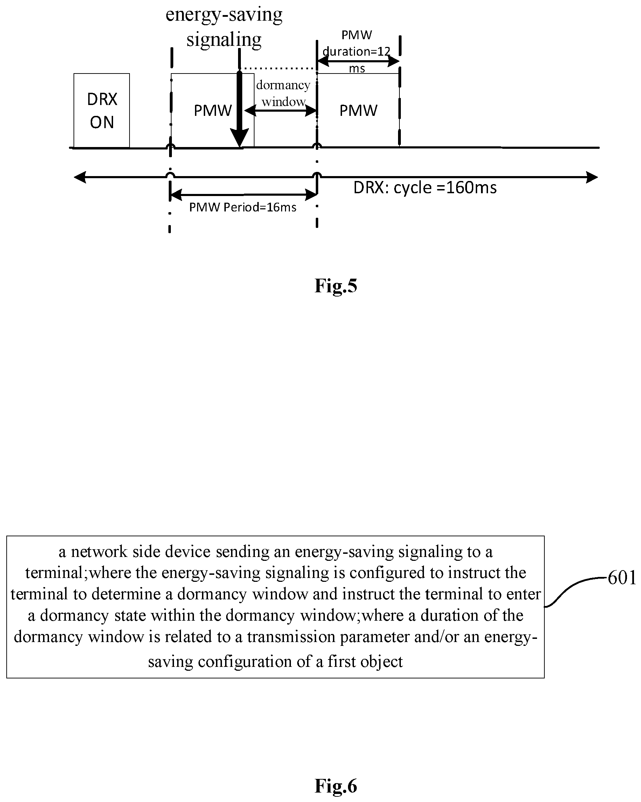

For example, as shown in Fig. 5, the network side device configures DRX (DRX cycle=160ms, startoffset=0ms) and XR-Specific PMW (listening cycle=16ms, listening duration=12ms) for the terminal. During the DRX OFF period, the terminal is still based on The XR-Specific PMW is configured to monitor PDCCH. The network side device configuration or pre-defined dormancy window end time is determined based on the XR-Specific PMW. The data packet successfully completes the transmission of an XR data packet within the listening duration of the first PMW. The network side issues an energy-saving command, the dormancy window is from the time when the terminal receives the energy-saving command to the start time of the next PMW. That is, the terminal enters the dormancy state after receiving the command and continues until the start time of the next PMW.

Scenario 4: Based on the transmission service characteristics, the base station does not configure DRX for the terminals it serves, and the terminals under the base station are in the Always ON state (monitoring PDCCH according to the SS configuration).

In this scenario, the network side device determines the energy-saving signaling (such as DCI) and sends the signaling according to the service transmission situation. Of course, the network side device may also configure one or more of the first configuration information, the second configuration information, and the retransmission PDCCH configuration information.

In this way, after receiving the energy-saving signaling, the terminal immediately enters the dormancy state based on the association between the start time of the dormancy window and the energy-saving signaling; or after successfully receiving the energy-saving signaling scheduling data and feeding back ACK, it enters the dormancy state.

The end time of the dormancy window is determined based on the second configuration information, that is, the second configuration information includes the energy-saving configuration of transmission corresponding to the first service, such as dormancy duration or dormancy end reference time.

The terminal performs one or more of in the dormancy window (it can also be understood as including at least one of behaviors in the dormancy state):
stops drx-onDuartion Timer and /or drx-Inactivity Timer on at least one DRX;
not measure the reference signal is not measured;
skip SPS/CG occasion(s);
skip ACK/NACK feedback timing;
monitor and retransmit PDCCH configuration information.

If there is a scheduling data reception error before the terminal receives the energy-saving signaling, and the retransmission is completed, the terminal performs monitoring of the retransmission PDCCH configuration information in the dormancy window may be monitoring retransmission PDCCH through the monitored retransmission PDCCH configuration information. The monitoring occasion of retransmission PDCCH is determined by the retransmission PDCCH configuration information.

Of course, if the PDCCH configuration information is not configured to be retransmitted, PDCCH retransmission will be monitored after the dormancy window ends.

Scenario 5: The network side device determines energy-saving signaling (such as DCI) and sends the signaling according to the service transmission situation. Of course, the network side device may also configure one or more of the first configuration information, the second configuration information, the retransmission PDCCH configuration information, and the third configuration information.

In this way, after receiving the energy-saving signaling, the terminal immediately enters the dormancy state based on the association between the start time of the dormancy window and the energy-saving signaling; or after successfully receiving the energy-saving signaling scheduling data and feeding back ACK, it enters the dormancy state.

The end time of the dormancy window is determined based on the second configuration information.

The terminal performs one or more of in the dormancy window (it can also be understood as performing at least one of behaviors in the dormancy state):

The terminal stops drx-onDuartion Timer and/or drx-Inactivity Timer on at least one DRX;

The reference signal is not measured;

Skip SPS/CG occasion(s);

Skip ACK/NACK feedback timing;

Monitor and retransmit PDCCH configuration information.

If the terminal receives energy-saving signaling, there is a scheduling data reception error, and the retransmission is not completed, the terminal determines the third configuration information in the energy-saving configuration and/or retransmits the PDCCH configuration information, and retransmits the PDCCH configuration information according to the third configuration information and/or retransmit PDCCH configuration information, terminate or suspend dormancy within the dormancy window, and perform at least one of behaviors:
monitor retransmission and/or initial transmission of PDCCH on SS;
start drx-Inactivity Timer;
measure or report reference signals;
transmit data and/or receive data on SPS resources on CG.

The starting time of terminating or suspending dormancy can be any one of:
a time domain position of feeding back a NACK by the terminal, such as t1;
a time domain position of feeding back a NACK by the terminal plus a discontinuous reception-downlink HARQ round-trip waiting timer (drx-HARQ-RTT-TimerDL) time, such as t1+t2, t2 is equal to the duration of drx-HARQ-RTT-TimerDL;
a first time domain position after a time of feeding back a NACK by the terminal or a time domain position of feeding back a NACK by the terminal, such as t1+t3, t3 is equal to the processing time of the base station receiving the uplink control channel;
a second time domain position after a time of feeding back a NACK by the terminal or a time domain position of feeding back a NACK by the terminal, such as t1+t4, t4 is equal to the processing time of the base station receiving the uplink data channel.

If the terminal suspends the dormancy window, the suspension end time can be any one of:
drx-RetransmissionTimerDL expires;
time domain position of correctly receiving the retransmitted data and feeding back the ACK by the terminal.

In addition, if the terminal terminates dormancy, the terminal continues to enter the active state.

In summary, according to the method of the embodiment of the present disclosure, the energy-saving instruction can implement a more flexible and faster-effective dormancy instruction; under the transmission window or Always ON configured for the first service, the dormancy window is related to the first service due to its duration, so it can not affect other business transmission.

As shown in Fig. 6, an energy-saving indication method is provided according to an embodiment of the present disclosure includes:
Step 601: a network side device sending an energy-saving signaling to a terminal;
where the energy-saving signaling is configured to instruct the terminal to determine a dormancy window and instruct the terminal to enter a dormancy state within the dormancy window;
where a duration of the dormancy window is related to a transmission parameter and/or an energy-saving configuration of a first object.

In this way, by sending energy-saving signaling to the terminal, the terminal can determine the dormancy window based on the energy-saving signaling after receiving the energy-saving signaling, and enter dormancy within the dormancy window. Therefore, the terminal's energy-saving no longer has ACK feedback delay., and because the duration of the dormancy window is related to the transmission parameters of the first object, and/or the duration of the dormancy window is related to the energy-saving configuration of the first object, it can also be adjusted for the first object, thereby achieving a more effective energy-saving.

Optionally, the first object includes one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

Optionally, the method further includes:
the network side device sending first configuration information, and the first configuration information is configured to configure the terminal to perform within the dormancy window one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

Optionally, the energy-saving signaling is a dynamic signaling, and the energy-saving signaling includes one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

Optionally, a starting time of the dormancy window is determined based on one or more of:
a time of receiving the energy-saving signaling;
a time of ACK after scheduling information indicated by the energy-saving signaling is successfully received; and
a time of receiving the scheduling information indicated by the energy-saving signaling.

Optionally, the method further includes:
the network side device sending second configuration information, where the second configuration information is configured to configure the end time of the dormancy window; where the second configuration information includes one or more of:
at least one discontinuous reception configuration parameter;
exclusive reception window parameters of a first service, where the first service corresponds to the first object;
dormancy duration;
dormancy end reference time; and
a location for monitoring PDCCH retransmissions during dormancy.

Optionally, a first indication field of the energy-saving signaling is configured to carry a dormancy indication; where,
the first indication field is a dormancy-specific indication field; or,
the first indication field is an indication field specified in the DCI.

Optionally, the first indication field is a PDCCH monitoring adaptation indication field, and the first indication field indicates dormancy through a reserved value.

Optionally, when the first indication field is further configured to indicate first configuration information and/or second configuration information, a bit length of the first indication field is determined by a quantity of the first configuration information and/or the second configuration information.

Optionally, the method further includes:
when the energy-saving signaling is DCI, the network- side device sending the reception configuration information of the energy-saving signaling; where the reception configuration information includes one or more of:
a payload size;
a control resource set (CORESET);
a search space (SS); and
a radio network temporary identity (RNTI).

Optionally, the method further includes:
the network side device sending retransmission PDCCH configuration information; where the retransmission PDCCH configuration information is configured to configure the terminal to terminate or suspend the dormancy within the dormancy window and perform at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

Optionally, a starting time of terminating or suspending dormancy includes any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

Optionally, the end time of suspending dormancy including any one of:
discontinuous reception-downlink retransmission timer (drx-RetransmissionTimerDL) expires;
a time domain position of correctly receiving the retransmitted data and feeding back the ACK by the terminal.

It should be noted that this method is implemented in conjunction with the energy-saving instruction method executed by the network side device. The implementation of the above method embodiment is applicable to this method and can also achieve the same technical effect.

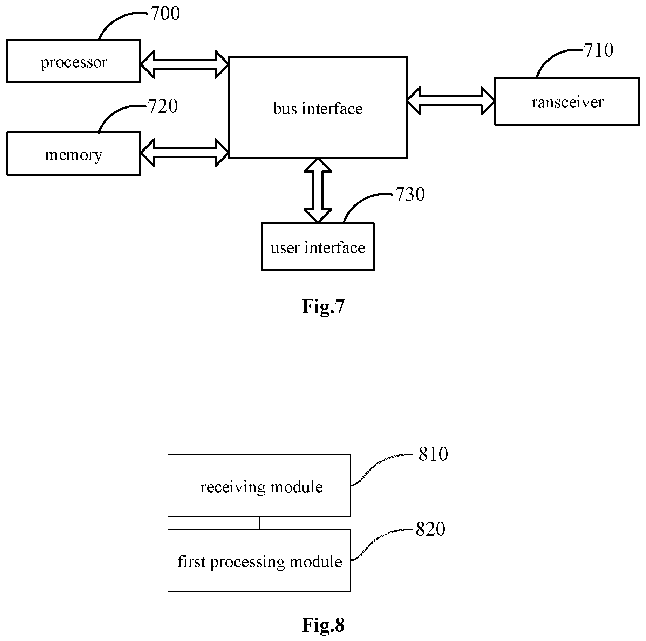

As shown in Fig. 7, the implementation of the present disclosure also provides an energy-saving indication device, including: a memory 720, a transceiver 710, a processor 700: a memory 720, used to store program instructions; a transceiver 710, used in the processing The processor 700 is used to send and receive data under the control of the processor 700; the processor 700 is used to read the program instructions in the memory 720; the energy-saving instructing device is used to execute the energy-saving instructing device executed by the terminal as above.

In FIG. 7, the bus architecture may include any number of interconnected buses and bridges, specifically one or more processors represented by processor 700 and various circuits of the memory represented by memory 720 are linked together. The bus architecture can also link together various other circuits such as peripherals, voltage regulators, and power management circuits, which are all well known in the art and therefore will not be described further herein. The bus interface provides the interface. Transceiver 710 may be a plurality of elements, including a transmitter and a receiver, providing a unit for communicating with various other devices over transmission media, including wireless channels, wired channels, optical cables, etc. Transmission medium. For different user equipment, the user interface 730 can also be an interface capable of externally connecting internal and external required equipment. The connected equipment includes but is not limited to a keypad, a display, a speaker, a microphone, a joystick, etc.

The processor 700 is responsible for managing the bus architecture and general processing, and the memory 720 can store data used by the processor 700 when performing operations.

Optionally, the processor 700 can be a CPU (Central Processing Unit), ASIC (Application Specific Integrated Circuit), FPGA (Field-Programmable Gate Array, field programmable gate array) or CPLD (Complex Programmable Logic Device, complex programmable logic device), the processor 700 may also adopt a multi-core architecture.

The processor 700 may execute any of the methods provided by the embodiments of the present application according to the obtained executable instructions by calling the program instructions stored in the memory. The processor 700 and the memory 720 may also be physically separated.

It should be noted here that the above-mentioned device provided by the embodiment of the present disclosure can implement all the method steps implemented by the above-mentioned method embodiment, and can achieve the same technical effect. The same as the method embodiment in this embodiment will no longer be used. The parts and beneficial effects will be described in detail.

As shown in Fig. 8, the implementation of the present disclosure also provides an energy-saving indicating device, including:
a receiving module 810, configured to receive an energy-saving signaling;
a first processing module 820, configured to determine a dormancy window according to the energy-saving signaling and enter a dormancy state within the dormancy window;
where a duration of the dormancy window is related to a transmission parameter and/or an energy-saving configuration of a first object.

Optionally, the first object includes one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

Optionally, the first processing module is further configured to perform:
performing, within the dormancy window based on first configuration information, one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

Optionally, the energy-saving signaling is a dynamic signaling, and the energy-saving signaling includes one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

Optionally, a starting time of the dormancy window is determined based on one or more of:
a time of receiving the energy-saving signaling;
a time of ACK after scheduling information indicated by the energy-saving signaling is successfully received; and
a time of receiving the scheduling information indicated by the energy-saving signaling.

Optionally, an end time of the dormancy window is determined based on second configuration information, and the second configuration information includes one or more of:
at least one discontinuous reception configuration parameter;
exclusive reception window parameters of a first service, where the first service corresponds to the first object;
dormancy duration;
dormancy end reference time; and
a location for monitoring PDCCH retransmissions during dormancy.

Optionally, a first indication field of the energy-saving signaling is configured to carry a dormancy indication; where,
the first indication field is a dormancy-specific indication field; or,
the first indication field is an indication field specified in the DCI.

Optionally, the first indication field is a PDCCH monitoring adaptation indication field, and the first indication field indicates dormancy through a reserved value.

Optionally, when the first indication field is further configured to indicate first configuration information and/or second configuration information, a bit length of the first indication field is determined by a quantity of the first configuration information and/or the second configuration information.

Optionally, when the energy-saving signaling is a service- specific DCI, reception configuration information of the energy-saving signaling includes one or more of:
a payload size;
a control resource set (CORESET);
a search space (SS); and
a radio network temporary identity (RNTI).

Optionally, the device further includes a second processing module;
the second processing module is further configured to perform: if there is a scheduling data reception error and a retransmission is not completed, according to rules predefined in a protocol, the terminal terminating or suspending the dormancy within the dormancy window, and performing at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG);
   or,
determining retransmission PDCCH configuration information and/or third configuration information in the energy-saving configuration, and terminating or suspending the dormancy within the dormancy window according to the retransmission PDCCH configuration information and/or the third configuration information in the energy-saving configuration, and performing at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

Optionally, a starting time of terminating or suspending dormancy includes any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

Optionally, the end time of suspending dormancy including any one of:
discontinuous reception-downlink retransmission timer (drx-RetransmissionTimerDL) expires;
a time domain position of correctly receiving the retransmitted data and feeding back the ACK by the terminal.

After receiving the energy-saving signaling, the device of the embodiment of the present disclosure can determine the dormancy window based on the energy-saving signaling, and enter dormancy within the dormancy window. Therefore, the energy-saving of the terminal no longer has ACK feedback delay, and because the duration of the dormancy window is related to the transmission parameters of the first object, and/or the duration of the dormancy window is related to the energy-saving configuration of the first object, and can also be adjusted with the first object, thereby achieving more effective energy-saving.

It should be noted that the division of units in the embodiment of the present application is schematic and is only a logical function division. In actual implementation, there may be other division methods. In addition, each functional unit in each embodiment of the present application can be integrated into one processing unit, each unit can exist physically alone, or two or more units can be integrated into one unit. The above integrated units can be implemented in the form of hardware or software functional units.

If the integrated unit is implemented in the form of a software functional unit and sold or used as an independent product, it may be stored in a processor-readable storage medium. Based on this understanding, the technical solution of the present application is essentially or contributes to the existing technology, or all or part of the technical solution can be embodied in the form of a software product, and the computer software product is stored in a storage medium, including several instructions to cause a computer device (which may be a personal computer, a server, or a network device, etc.) or a processor to execute all or part of the steps of the methods described in various embodiments of the application. The aforementioned storage media include: U disk, mobile hard disk, Read-Only Memory (ROM), Random Access Memory (RAM), magnetic disk or optical disk and other media that can store program code.

It should be noted here that the above-mentioned device provided by the embodiment of the present disclosure can implement all the method steps implemented by the above-mentioned terminal-side energy-saving indication method embodiment, and can achieve the same technical effect. No further explanation will be given here. The same parts and beneficial effects of the method embodiments will be described in detail.

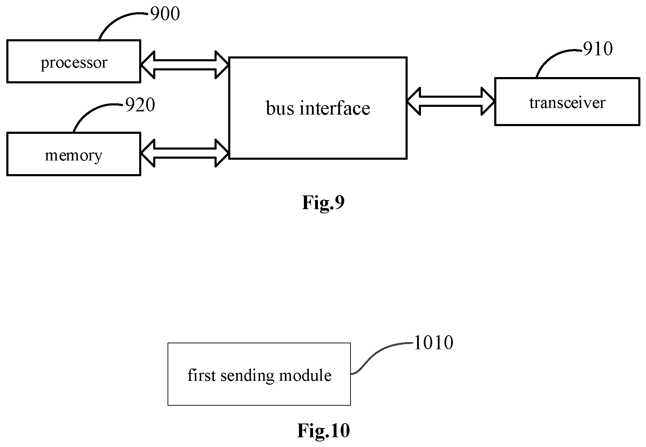

As shown in Fig.9, the embodiment of the present disclosure also provides an energy-saving indication device, including: a memory 920, a transceiver 910, a processor 900: a memory 920, used to store program instructions; a transceiver 910, used to transmit and receive data under the control of the processor 900; the processor 900 is used to read the program instructions in the memory 920;

The energy-saving indication device is configured to perform the energy-saving indication method performed by the network side device as above.

In FIG. 9, the bus architecture may include any number of interconnected buses and bridges, specifically one or more processors represented by processor 90 0 and various circuits of the memory represented by memory 9 20 are linked together. The bus architecture can also link together various other circuits such as peripherals, voltage regulators, and power management circuits, which are all well known in the art and therefore will not be described further herein. The bus interface provides the interface. The transceiver 910 may be a plurality of elements, including a transmitter and a receiver, providing a unit for communicating with various other devices over transmission media, including wireless channels, wired channels, optical cables and other transmission media. The processor 90 0 is responsible for managing the bus architecture and general processing, and the memory 9 20 can store data used by the processor 90 0 when performing operations.

The processor 90 0 may be a central processing unit (CPU), an Application Specific Integrated Circuit (ASIC), a Field - Programmable Gate Array (FPGA) or a Complex Programmable Logic Device (CPLD), the processor can also adopt a multi-core architecture.

It should be noted here that the above-mentioned device provided by the embodiment of the present disclosure can implement all the method steps implemented by the above-mentioned method embodiment, and can achieve the same technical effect. The same as the method embodiment in this embodiment will no longer be used. The parts and beneficial effects will be described in detail.

As shown in Fig. 10, the implementation of the present disclosure also provides an energy-saving indicating device, including:
a first sending module 1010, configured to send an energy-saving signaling to a terminal;
where the energy-saving signaling is configured to instruct the terminal to determine a dormancy window and instruct the terminal to enter a dormancy state within the dormancy window;
where a duration of the dormancy window is related to a transmission parameter and/or an energy-saving configuration of a first object.

Optionally, the first object includes one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

Optionally, the device further includes a second sending module;
the second sending module is configured to send first configuration information, and the first configuration information is configured to configure the terminal to perform within the dormancy window one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

Optionally, the energy-saving signaling is a dynamic signaling, and the energy-saving signaling includes one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

Optionally, a starting time of the dormancy window is determined based on one or more of:
a time of receiving the energy-saving signaling;
a time of ACK after scheduling information indicated by the energy-saving signaling is successfully received; and
a time of receiving the scheduling information indicated by the energy-saving signaling.

Optionally, the device further includes a third sending module;
the third sending module is configured to perform sending second configuration information, where the second configuration information is configured to configure the end time of the dormancy window; where the second configuration information includes one or more of:
at least one discontinuous reception configuration parameter;
exclusive reception window parameters of a first service, where the first service corresponds to the first object;
dormancy duration;
dormancy end reference time; and
a location for monitoring PDCCH retransmissions during dormancy.

Optionally, a first indication field of the energy-saving signaling is configured to carry a dormancy indication; where,
the first indication field is a dormancy-specific indication field; or,
the first indication field is an indication field specified in the DCI.

Optionally, the first indication field is a PDCCH monitoring adaptation indication field, and the first indication field indicates dormancy through a reserved value.

Optionally, when the first indication field is further configured to indicate first configuration information and/or second configuration information, a bit length of the first indication field is determined by a quantity of the first configuration information and/or the second configuration information.

Optionally, the device further includes a fourth sending module;
the fourth sending module is configured to perform: when the energy-saving signaling is DCI, sending the reception configuration information of the energy-saving signaling; where the reception configuration information includes one or more of:
a payload size;
a control resource set (CORESET);
a search space (SS); and
a radio network temporary identity (RNTI).

Optionally, the device further includes a fifth sending module;
the fifth sending module is configured to perform sending retransmission PDCCH configuration information; where the retransmission PDCCH configuration information is configured to configure the terminal to terminate or suspend the dormancy within the dormancy window and perform at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

Optionally, a starting time of terminating or suspending dormancy includes any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

Optionally, the end time of suspending dormancy including any one of:
discontinuous reception-downlink retransmission timer (drx-RetransmissionTimerDL) expires;
a time domain position of correctly receiving the retransmitted data and feeding back the ACK by the terminal.

The device of the embodiment of the present disclosure sends energy-saving signaling to the terminal, so that after receiving the energy-saving signaling, the terminal can determine the dormancy window based on the energy-saving signaling, and enter dormancy within the dormancy window. Therefore, the terminal no longer has energy-saving. ACK feedback delay, and because the duration of the dormancy window is related to the transmission parameters of the first object, and/or the duration of the dormancy window is related to the energy-saving configuration of the first object, it can also be adjusted with the first object, thereby achieving a more effective energy saving.

It should be noted that the division of units in the embodiment of the present application is schematic and is only a logical function division. In actual implementation, there may be other division methods. In addition, each functional unit in each embodiment of the present application can be integrated into one processing unit, each unit can exist physically alone, or two or more units can be integrated into one unit. The above integrated units can be implemented in the form of hardware or software functional units.

If the integrated unit is implemented in the form of a software functional unit and sold or used as an independent product, it may be stored in a processor-readable storage medium. Based on this understanding, the technical solution of the present application is essentially or contributes to the existing technology, or all or part of the technical solution can be embodied in the form of a software product, and the computer software product is stored in a storage medium, including several instructions to cause a computer device (which may be a personal computer, a server, or a network device, etc.) or a processor to execute all or part of the steps of the methods described in various embodiments of the application. The aforementioned storage media include: U disk, mobile hard disk, read-only memory (ROM), Random Access Memory (RAM), magnetic disk or optical disk and other media that can store program code.

It should be noted here that the above-mentioned device provided by the embodiment of the present disclosure can implement all the method steps implemented by the above-mentioned network-side energy-saving indication method embodiment, and can achieve the same technical effect. No further explanation will be given here. The same parts and beneficial effects of the method embodiments will be described in detail.

In some embodiments of the present disclosure, a processor-readable storage medium is also provided, the processor-readable storage medium stores program instructions, and the program instructions are used to cause the processor to execute the above steps of the energy-saving indication method at the terminal side, or the steps of the above energy-saving indication method at the network side.

Optionally, when the program instruction is used to cause the processor to execute the steps of implementing the above terminal-side energy-saving indication method, the program instruction when executed by the processor can implement the above energy-saving indication method as shown in Fig. 1. All implementation methods in the embodiments will not be described again here to avoid repetition.

Optionally, when the program instruction is used to cause the processor to execute the steps of implementing the above network-side energy-saving indication method, the program instruction when executed by the processor can implement the above energy-saving indication method as shown in Fig. 2. All implementations in the method embodiments will not be described again here to avoid repetition.

The embodiments of the present disclosure can be applied to a variety of systems, especially 5G systems. For example, applicable systems may be Global System of Mobile communication (GSM) system, Code Division Multiple Access (CDMA) system, Wideband Code Division Multiple Access (WCDMA) general packet Wireless service (General Packet Radio Service, GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave Access (WiMAX) system, 5G New Radio, NR) system, etc. These various systems include terminal equipment and network equipment. The system can also include the core network part, such as the Evolved Packet System (EPS), 5G system (5GS), etc.

The terminal device involved in the embodiments of the present disclosure may be a device that provides voice and/or data connectivity to users, a handheld device with a wireless connection function, or other processing devices connected to a wireless modem, etc. In different systems, the names of terminal equipment may also be different. For example, in a 5G system, the terminal equipment may be called User Equipment (UE). Wireless terminal equipment can communicate with one or more core networks (Core Network, CN) via a Radio Access Network (RAN). The wireless terminal equipment can be a mobile terminal equipment, such as a mobile phone (also known as a "cell phone") and computers with mobile terminal devices, which may be, for example, portable, pocket-sized, handheld, computer-built-in or vehicle-mounted mobile devices, which exchange speech and/or data with the radio access network. For example, Personal Communication Service (PCS) phones, cordless phones, Session Initiated Protocol (SIP) phones, Wireless Local Loop (WLL) stations, Personal Digital Assistants (PDA) and other equipment. Wireless terminal equipment may also be called a system, a subscriber unit, a subscriber station, a mobile station, a mobile station, a remote station, or an access point., remote terminal equipment (remote terminal), access terminal equipment (access terminal), user terminal equipment (user terminal), user agent, user device (user device), are not limited in the embodiments of the present disclosure.

The network device involved in the embodiment of the present disclosure may be a base station, and the base station may include multiple cells that provide services for terminals. Depending on the specific application, a base station can also be called an access point, or it can be a device in the access network that communicates with wireless terminal equipment through one or more sectors on the air interface, or it can be named by another name. The network device may be used to exchange received air frames with Internet Protocol (IP) packets and act as a router between the wireless end device and the rest of the access network, which may include the Internet Protocol (IP) communications network. Network devices also coordinate attribute management of the air interface. For example, the network equipment involved in the embodiments of the present disclosure may be a network equipment (Base Transceiver Station, BTS) in the Global System for Mobile communications (GSM) or Code Division Multiple Access (CDMA), it can also be a network device (NodeB) in Wide-band Code Division Multiple Access (WCDMA), or it can be an evolution in a Long Term Evolution (LTE) system Type network equipment (evolutional Node B, eNB or e-NodeB), 5G base station (gNB) in 5G network architecture (next generation system), or Home evolved Node B (HeNB), relay node (relay node), home base station (femto), pico base station (pico), etc., are not limited in the embodiments of the present disclosure. In some network structures, network equipment may include centralized unit (CU) nodes and distributed unit (DU) nodes. The centralized unit and distributed unit may also be arranged geographically separately.

Network equipment and terminal equipment can each use one or more antennas for Multi-Input Multi-Output (MIMO) transmission. MIMO transmission can be Single User MIMO, (SU-MIMO) or Multi-User MIMO.. Depending on the shape and number of root antenna combinations, MIMO transmission can be 2D-MIMO, 3D-MIMO, FD-MIMO or massive-MIMO, or it can be diversity transmission, precoding transmission or beamforming transmission, etc.

Those skilled in the art will understand that embodiments of the present application may be provided as methods, systems, or computer program products. Accordingly, the present application may take the form of an entirely hardware embodiment, an entirely software embodiment, or an embodiment that combines software and hardware aspects. Furthermore, the application may take the form of a computer program product implemented on one or more computer-usable storage media (including, but not limited to, magnetic disk storage and optical storage, etc.) embodying computer-usable program code therein.

The present application is described with reference to flowchart illustrations and/or block diagrams of methods, apparatus (systems), and computer program products according to embodiments of the application. It will be understood that each process and/or block in the flowchart illustrations and/or block diagrams, and combinations of processes and/or blocks in the flowchart illustrations and/or block diagrams, can be implemented by computer-executable instructions. These computer-executable instructions may be provided to a processor of a general-purpose computer, special-purpose computer, embedded processor, or other programmable data processing device to produce a machine such that the instructions executed by the processor of the computer or other programmable data processing device produce Means for implementing the functions specified in a process or processes in a flowchart and/or in a block or blocks in a block diagram.

These processor-executable instructions may also be stored in a processor-readable memory that causes a computer or other programmable data processing apparatus to operate in a particular manner, such that the generation of instructions stored in the processor-readable memory includes the manufacture of the instruction means product, the instruction device implements the function specified in one process or multiple processes in the flow chart and/or one block or multiple blocks in the block diagram.

These processor-executable instructions may also be loaded onto a computer or other programmable data processing device, causing a series of operational steps to be performed on the computer or other programmable device to produce computer-implemented processing, thereby causing the computer or other programmable device to The instructions that are executed provide steps for implementing the functions specified in a process or processes of the flowchart diagrams and/or a block or blocks of the block diagrams.

Obviously, those skilled in the art can make various changes and modifications to the present application without departing from the spirit and scope of the present application. In this way, if these modifications and variations of the present application fall within the scope of the claims of the present application and equivalent technologies, the present application is also intended to include these modifications and variations.

## Claims

1. An energy-saving indication method, comprising:
a terminal receiving an energy-saving signaling;
the terminal determining a dormancy window according to the energy-saving signaling, and entering a dormancy state within the dormancy window;
wherein a duration of the dormancy window is related to a transmission parameter and/or an energy-saving configuration of a first object.

2. The method according to claim 1, wherein the first object comprises one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

3. The method according to claim 1, wherein the terminal entering the dormancy state within the dormancy window comprises:
the terminal performing, within the dormancy window based on first configuration information, one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

4. The method according to claim 1 or 3, wherein the energy-saving signaling is a dynamic signaling, and the energy-saving signaling comprises one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

5. The method according to claim 1, wherein a starting time of the dormancy window is determined based on one or more of:
a time of receiving the energy-saving signaling;
a time of ACK after scheduling information indicated by the energy-saving signaling is successfully received; and
a time of receiving the scheduling information indicated by the energy-saving signaling.

6. The method according to claim 1 or 5, wherein an end time of the dormancy window is determined based on second configuration information, and the second configuration information comprises one or more of:
at least one discontinuous reception configuration parameter;
exclusive reception window parameters of a first service, wherein the first service corresponds to the first object;
dormancy duration;
dormancy end reference time; and
a location for monitoring PDCCH retransmissions during dormancy.

7. The method according to any one of claims 1-6, wherein a first indication field of the energy-saving signaling is configured to carry a dormancy indication; wherein,
the first indication field is a dormancy-specific indication field; or,
the first indication field is an indication field specified in the DCI.

8. The method according to claim 7, wherein the first indication field is a PDCCH monitoring adaptation indication field, and the first indication field indicates dormancy through a reserved value.

9. The method according to claim 7 or 8, wherein when the first indication field is further configured to indicate first configuration information and/or second configuration information, a bit length of the first indication field is determined by a quantity of the first configuration information and/or the second configuration information.

10. The method according to claim 4, wherein when the energy-saving signaling is a service- specific DCI, reception configuration information of the energy-saving signaling comprises one or more of:
a payload size;
a control resource set (CORESET);
a search space (SS); and
a radio network temporary identity (RNTI).

11. The method according to claim 1, further comprising:
if there is a scheduling data reception error and a retransmission is not completed, according to rules predefined in a protocol, the terminal terminating or suspending the dormancy within the dormancy window, and performing at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG);
or,
the terminal determining retransmission PDCCH configuration information and/or third configuration information in the energy-saving configuration, and terminating or suspending the dormancy within the dormancy window according to the retransmission PDCCH configuration information and/or the third configuration information in the energy-saving configuration, and performing at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

12. The method according to claim 11, wherein a starting time of terminating or suspending dormancy comprises any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

13. The method according to claim 11, wherein the end time of suspending dormancy comprising any one of:
discontinuous reception-downlink retransmission timer (drx-RetransmissionTimerDL) expires;
a time domain position of correctly receiving the retransmitted data and feeding back the ACK by the terminal.

14. The method according to claim 11, wherein the terminating or suspending dormancy within the dormancy window comprises:
the terminal terminating or suspending the dormancy within the dormancy window based on a first duration;
wherein the first duration is a duration threshold of the dormancy window predefined by a protocol or in the third configuration information.

15. An energy-saving indication method, comprising:
a network side device sending an energy-saving signaling to a terminal;
wherein the energy-saving signaling is configured to instruct the terminal to determine a dormancy window and instruct the terminal to enter a dormancy state within the dormancy window;
wherein a duration of the dormancy window is related to a transmission parameter and/or an energy-saving configuration of a first object.

16. The method according to claim 15, wherein the first object comprises one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

17. The method according to claim 15, further comprising:
the network side device sending first configuration information, and the first configuration information is configured to configure the terminal to perform within the dormancy window one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

18. The method according to claim 15 or 17, wherein the energy-saving signaling is a dynamic signaling, and the energy-saving signaling comprises one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

19. The method according to claim 15, wherein a starting time of the dormancy window is determined based on one or more of:
a time of receiving receiving the energy-saving signaling;
a time of ACK after scheduling information indicated by the energy-saving signaling is successfully received; and
a time of receiving the scheduling information indicated by the energy-saving signaling.

20. The method according to claim 15 or 19, further comprising:
the network side device sending second configuration information, wherein the second configuration information is configured to configure the end time of the dormancy window; wherein the second configuration information comprises one or more of:
at least one discontinuous reception configuration parameter;
exclusive reception window parameters of a first service, wherein the first service corresponds to the first object;
dormancy duration;
dormancy end reference time; and
a location for monitoring PDCCH retransmissions during dormancy.

21. The method according to any one of claims 15-20, wherein a first indication field of the energy-saving signaling is configured to carry a dormancy indication; wherein,
the first indication field is a dormancy-specific indication field; or,
the first indication field is an indication field specified in the DCI.

22. The method according to claim 21, wherein the first indication field is a PDCCH monitoring adaptation indication field, and the first indication field indicates dormancy through a reserved value.

23. The method according to claim 21 or 22, wherein when the first indication field is further configured to indicate first configuration information and/or second configuration information, a bit length of the first indication field is determined by a quantity of the first configuration information and/or the second configuration information.

24. The method according to claim 18, further comprising:
when the energy-saving signaling is DCI, the network- side device sending the reception configuration information of the energy-saving signaling; wherein the reception configuration information comprises one or more of:
a payload size;
a control resource set (CORESET);
a search space (SS); and
a radio network temporary identity (RNTI).

25. The method according to claim 15, further comprising:
the network side device sending retransmission PDCCH configuration information; wherein the retransmission PDCCH configuration information is configured to configure the terminal to terminate or suspend the dormancy within the dormancy window and perform at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

26. The method according to claim 25, wherein a starting time of terminating or suspending dormancy comprises any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

27. The method according to claim 25, wherein the end time of suspending dormancy comprising any one of:
discontinuous reception-downlink retransmission timer (drx-RetransmissionTimerDL) expires;
a time domain position of correctly receiving the retransmitted data and feeding back the ACK by the terminal.

28. An energy-saving indicating device, comprising a memory, a transceiver, and a processor; wherein
the memory is configured to store program instructions; a transceiver is configured to send and receive data under a control of the processor; a processor is configured to read the program instructions in the memory; the energy-saving indicating device is configured to perform the method according to any one of claims 1 to 14.

29. An energy-saving indicating device, comprising:
a receiving module, configured to receive an energy-saving signaling;
a first processing module, configured to determine a dormancy window according to the energy-saving signaling and enter a dormancy state within the dormancy window;
wherein a duration of the dormancy window is related to a transmission parameter and/or an energy-saving configuration of a first object.

30. The energy-saving indicating device according to claim 29, wherein the first object comprises one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

31. The energy-saving indicating device according to claim 29, wherein the first processing module is further configured to:
perform, within the dormancy window based on first configuration information, one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

32. The energy-saving indicating device according to claim 29 or 31, wherein the energy-saving signaling is a dynamic signaling, and the energy-saving signaling comprises one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

33. The energy-saving indicating device according to claim 29, wherein a starting time of the dormancy window is determined based on one or more of:
a time of receiving the energy-saving signaling;
a time of ACK after scheduling information indicated by the energy-saving signaling is successfully received; and
a time of receiving the scheduling information indicated by the energy-saving signaling.

34. The energy-saving indicating device according to claim 29 or 33, wherein an end time of the dormancy window is determined based on second configuration information, and the second configuration information comprises one or more of:
at least one discontinuous reception configuration parameter;
exclusive reception window parameters of a first service, wherein the first service corresponds to the first object;
dormancy duration;
dormancy end reference time; and
a location for monitoring PDCCH retransmissions during dormancy.

35. The energy-saving indicating device according to any one of claims 29-34, wherein a first indication field of the energy-saving signaling is configured to carry a dormancy indication; wherein,
the first indication field is a dormancy-specific indication field; or,
the first indication field is an indication field specified in the DCI.

36. The energy-saving indicating device according to claim 35, wherein the first indication field is a PDCCH monitoring adaptation indication field, and the first indication field indicates dormancy through a reserved value.

37. The energy-saving indicating device according to claim 35 or 36, wherein when the first indication field is further configured to indicate first configuration information and/or second configuration information, a bit length of the first indication field is determined by a quantity of the first configuration information and/or the second configuration information.

38. The energy-saving indicating device according to claim 32, wherein when the energy-saving signaling is a service- specific DCI, reception configuration information of the energy-saving signaling comprises one or more of:
a payload size;
a control resource set (CORESET);
a search space (SS); and
a radio network temporary identity (RNTI).

39. The energy-saving indicating device according to claim 29, further comprising a second processing module, configured to:
if there is a scheduling data reception error and a retransmission is not completed, according to rules predefined in a protocol, terminate or suspend the dormancy within the dormancy window, and perform at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG);
or,
determine retransmission PDCCH configuration information and/or third configuration information in the energy-saving configuration, and terminate or suspend the dormancy within the dormancy window according to the retransmission PDCCH configuration information and/or the third configuration information in the energy-saving configuration, and performing at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

40. The energy-saving indicating device according to claim 39, wherein a starting time of terminating or suspending dormancy comprises any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

41. The energy-saving indicating device according to claim 39, wherein the end time of suspending dormancy comprising any one of:
discontinuous reception-downlink retransmission timer (drx-RetransmissionTimerDL) expires;
a time domain position of correctly receiving the retransmitted data and feeding back the ACK by the terminal.

42. The energy-saving indicating device according to claim 39, wherein the second processing module is further configured to:
terminate or suspend the dormancy within the dormancy window based on a first duration;
wherein the first duration is a duration threshold of the dormancy window predefined by a protocol or in the third configuration information.

43. An energy-saving indicating device, comprising a memory, a transceiver, and a processor; wherein
the memory is configured to store program instructions; a transceiver is configured to send and receive data under a control of the processor; a processor is configured to read the program instructions in the memory; the energy-saving indicating device is configured to perform the method according to any one of claims 15 to 27.

44. An energy-saving indicating device, comprising:
a first sending module, configured to send an energy-saving signaling to a terminal;
wherein the energy-saving signaling is configured to instruct the terminal to determine a dormancy window and instruct the terminal to enter a dormancy state within the dormancy window;
wherein a duration of the dormancy window is related to a transmission parameter and/or an energy-saving configuration of a first object.

45. The energy-saving indicating device according to claim 44, wherein the first object comprises one or more of:
a physical downlink shared channel (PDSCH);
a physical uplink shared channel (PUSCH);
a semi-persistent scheduling (SPS);
a configured grant (CG);
a physical downlink control channel (PDCCH); and
a physical uplink control channel (PUCCH).

46. The energy-saving indicating device according to claim 44, further comprising: a second sending module, configured to
send first configuration information, and the first configuration information is configured to configure the terminal to perform within the dormancy window one or more of:
stopping monitoring a PDCCH;
stopping at least one timer configured on a network side;
skipping a reception and/or transmission of SPS resources;
skipping a reception and/or transmission of CG resources;
skipping an ACK or NACK feedback; and
not reporting a measurement of reference signal.

47. The energy-saving indicating device according to claim 44 or 46, wherein the energy-saving signaling is a dynamic signaling, and the energy-saving signaling comprises one or more of:
downlink control information (DCI);
DCI used to schedule PDSCH;
DCI used to schedule PUSCH;
DCI used to schedule PDCCH;
DCI used to schedule PUCCH;
DCI not used to schedule PDSCH;
DCI not used to schedule PUSCH;
DCI not used to schedule PDCCH;
DCI not used to schedule PUCCH; and
a media access control (MAC) layer signaling.

48. The energy-saving indicating device according to claim 44, wherein a starting time of the dormancy window is determined based on one or more of:
a time of receiving receiving the energy-saving signaling;
a time of ACK after scheduling information indicated by the energy-saving signaling is successfully received; and
a time of receiving the scheduling information indicated by the energy-saving signaling.

49. The energy-saving indicating device according to claim 44 or 48, further comprising: a third sending module, configured to
send second configuration information, wherein the second configuration information is configured to configure the end time of the dormancy window; wherein the second configuration information comprises one or more of:
at least one discontinuous reception configuration parameter;
exclusive reception window parameters of a first service, wherein the first service corresponds to the first object;
dormancy duration;
dormancy end reference time; and
a location for monitoring PDCCH retransmissions during dormancy.

50. The energy-saving indicating device according to any one of claims 44-49, wherein a first indication field of the energy-saving signaling is configured to carry a dormancy indication; wherein,
the first indication field is a dormancy-specific indication field; or,
the first indication field is an indication field specified in the DCI.

51. The energy-saving indicating device according to claim 50, wherein the first indication field is a PDCCH monitoring adaptation indication field, and the first indication field indicates dormancy through a reserved value.

52. The energy-saving indicating device according to claim 50 or 51, wherein when the first indication field is further configured to indicate first configuration information and/or second configuration information, a bit length of the first indication field is determined by a quantity of the first configuration information and/or the second configuration information.

53. The energy-saving indicating device according to claim 47, further comprising: a fourth sending module, configured to
when the energy-saving signaling is DCI, send the reception configuration information of the energy-saving signaling; wherein the reception configuration information comprises one or more of:
a payload size;
a control resource set (CORESET);
a search space (SS); and
a radio network temporary identity (RNTI).

54. The met energy-saving indicating device according to claim 44, further comprising: a fifth sending module, configured to
send retransmission PDCCH configuration information; wherein the retransmission PDCCH configuration information is configured to configure the terminal to terminate or suspend the dormancy within the dormancy window and perform at least one of:
monitoring retransmissions and/or initial transmissions of PDCCH on a search space (SS);
starting the discontinuous reception-Inactivity timer (drx-Inactivity Timer);
measuring or reporting reference signals;
transmitting data and /or receiving data on the SPS resource on a configured grant (CG).

55. The energy-saving indicating device according to claim 54, wherein a starting time of terminating or suspending dormancy comprises any one of:
a time domain position of feeding back a NACK by the terminal;
a time domain position of feeding back a NACK by the terminal plus a discontinuous reception-downlink HARQ round-trip waiting timer (drx-HARQ-RTT-TimerDL) time;
a first time domain position after a time of feeding back a NACK by the terminal or a time domain position of feeding back a NACK by the terminal, the first time domain position is determined based on a processing time of a network side device receiving an uplink control channel; and
a second time domain position after a time of feeding back a NACK by the terminal or a time domain position of feeding back a NACK by the terminal, the second time domain position is determined based on a processing time of a network side device receiving an uplink data channel.

56. The energy-saving indicating device according to claim 54, wherein the end time of suspending dormancy comprising any one of:
discontinuous reception-downlink retransmission timer (drx-RetransmissionTimerDL) expires;
a time domain position of correctly receiving the retransmitted data and feeding back the ACK by the terminal.

57. A processor-readable storage medium, wherein the processor-readable storage medium stores computer programs, and the computer programs are configured to enable the processor to perform the energy-saving indication method according to any one of claims 1 to 14 or the energy-saving indication method according to any one of claims 15 to 27.
